# EUROPEAN PATENT SPECIFICATION

(11) **EP 3 309 200 B1**
(45) Date of publication and mention of the grant of the patent: **08.04.2020**
(21) Application number: 16807330.2
(22) Date of filing: 31.05.2016
(51) Int. Cl.: C08L 7/00, C08K 3/04, C08K 3/36, C08K 5/31, C08L 9/00, F16F 15/08

(54) **RUBBER COMPOSITION, VIBRATION REDUCTION RUBBER COMPOSITION, AND VIBRATION REDUCTION RUBBER**
KAUTSCHUKZUSAMMENSETZUNG, SCHWINGUNGSREDUKTIONSKAUTSCHUKZUSAMMENSETZUNG UND SCHWINGUNGSREDUKTIONSKAUTSCHUK
COMPOSITION DE CAOUTCHOUC, COMPOSITION DE CAOUTCHOUC À RÉDUCTION DE VIBRATIONS, ET CAOUTCHOUC À RÉDUCTION DE VIBRATIONS

(30) Priority: 10.06.2015 JP 2015117750
(43) Date of publication of application: 18.04.2018
(73) Proprietor: Bridgestone Corporation, Tokyo 104-8340 (JP)
(72) Inventor: YAMAMOTO, Masaaki, Tokyo 104-8340 (JP)
(74) Representative: Oxley, Robin John George
(86) International application number: PCT/JP2016/066053
(87) International publication number: WO 2016/199623

(56) References cited:
- EP-A1- 0 849 321
- JP-A- 2001 019 802
- JP-A- 2003 070 503
- US-A1- 2010 059 160
- US-B1- 6 313 213
- DATABASE WPI Week 200237 Thomson Scientific, London, GB; AN 2002-333434 XP002781102, & JP 2002 003650 A (YOKOHAMA RUBBER CO LTD) 9 January 2002 (2002-01-09)
- DATABASE WPI Week 201341 Thomson Scientific, London, GB; AN 2013-K10493 XP002781104, & JP 2013 108036 A (SUMITOMO RUBBER IND LTD) 6 June 2013 (2013-06-06)

## Description

### Technical Field

The present invention relates to a rubber composition, an anti-vibration rubber composition, and an anti-vibration rubber.

### Background Art

A torsional damper, an engine mount, a muffler hanger and the like have been conventionally used in various vehicles including automobiles for purposes of preventing noise by absorbing vibration occurring in driving an engine, and an anti-vibration rubber has been used as the material for such a component. An anti-vibration rubber used for such purposes is required to have an excellent fatigue property in addition to good heat resistance, good ozone resistance and a low dynamic magnification.

For example, in order to improve the crack growth resistance, weather resistance (ozone resistance) and energy absorption of a damping member made of a rubber composition for damping members, PTL1 describes a rubber composition for damping members comprising a rubber component containing a conjugated diene polymer and a conjugated diene compound-nonconjugated olefin copolymer, and a resin, where the rubber composition comprises the resin in a proportion of 30 parts by mass to 80 parts by mass based on 100 parts by mass of the rubber component.

Besides, in order to obtain a rubber composition for seismically isolated structures that has an elastic modulus slightly lowered through repeated deformation and is capable of definitely retaining initial performances for a long period of time, PTL2 discloses a rubber composition for seismically isolated structures comprising, as a principal rubber component, a high-cis-isoprene rubber containing 90% by mass or more of cis form, wherein the rubber composition comprises the high-cis-isoprene rubber in a proportion of 50% by mass or more of the entire rubber component, and the cis form in the high-cis isoprene rubber has a content of 90 to 99% by mass.

### Citation List

### Patent Literature

PTL1: JP 2013-107968A
PTL2: JP 2009-269967A

### Summary of Invention

### Technical Problem

The above-described rubber composition containing a resin is used as a damping material in many cases, and is used as a rubber material of a damping member, such as a damper, used for protecting a building from strong ground motion. Therefore, the rubber composition is obtained without considering characteristics such as a dynamic magnification required of an anti-vibration rubber for an automobile, and has a characteristic value far inferior to required one. In general, it is very difficult for a rubber composition having a lowered dynamic magnification and an improved fatigue property to retain scorch resistance (work stability).

An object of the present invention is to provide a rubber composition, an anti-vibration rubber composition and an anti-vibration rubber obtained by curing the rubber composition, all of which have a low dynamic magnification, are excellent in fatigue property and are capable of retaining scorch resistance (work stability).

### Solution to Problem

The present inventors have found that a rubber composition having a low dynamic magnification, an excellent fatigue property and stable workability can be obtained by using a specific guanidine compound together with a rubber component containing at least a natural rubber and a high-cis isoprene rubber having a content of cis-1,4 bond of 95% by mass or more, and a carbon black and a silica having a prescribed colloidal characteristic, and thus, the present invention was accomplished.

Specifically, the present invention is constituted as follows:
<1> An anti-vibration rubber composition, comprising: a rubber component containing at least a natural rubber and a high-cis isoprene rubber having a content of cis-1,4 bond of 95% by mass or more; a carbon black having an iodine adsorption number of 20 mg/g or less and a DBP adsorption number of 55 ml/100 g or less; a silica having a nitrogen adsorption specific surface area (the BET method) of 80 m²/g or more and less than 240 m²/g; and a compound represented by the following general formula (1), wherein m and n each independently represent an integer of 1 or more: 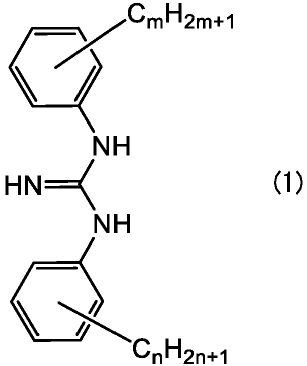
<2> The anti-vibration rubber composition according to <1>, in which the carbon black has an iodine adsorption number less than 20 mg/g and a DBP adsorption number less than 55 ml/100 g.
<3> The anti-vibration rubber composition according to <1> or <2>, in which a mass ratio (a/b) between the natural rubber (a) and the high-cis isoprene rubber (b) is 50/50 to 99/1.
<4> The anti-vibration rubber composition according to any one of <1> to <3>, further comprising a silane coupling agent.
<5> An anti-vibration rubber obtained by curing the anti-vibration rubber composition according to any one of <1> to <4>.

### Advantageous Effects of Invention

According to the present invention, a rubber composition, an anti-vibration rubber composition and an anti-vibration rubber obtained by curing the rubber composition, all of which have a low dynamic magnification, are excellent in fatigue property and are excellent in scorch resistance (work stability), can be provided.

### Description of Embodiment

### <Anti-vibration Rubber Composition>

An anti-vibration rubber composition of the present invention comprises: a rubber component containing at least a natural rubber and a high-cis isoprene rubber having a content of cis-1,4 bond of 95% by mass or more; a carbon black having an iodine adsorption number of 35 mg/g or less and a DBP adsorption number of 75 ml/100 g or less; a silica having a nitrogen adsorption specific surface area (the BET method) of 80 m²/g or more and less than 240 m²/g; and a compound represented by the following general formula (1):

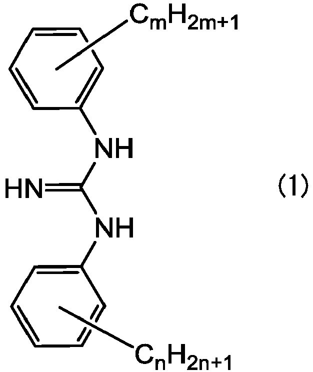

In general formula (1), m and n each independently represent an integer of 1 or more.

A hydrocarbon group represented by -CₘH₂ₘ₊₁ or -CₙH₂ₙ₊₁ may be bonded in any of the ortho position, the meta position and the para position.

The reason why the anti-vibration rubber composition of the present invention having the above-described structure has a low dynamic magnification, high durability and also excellent work stability is not clear, but is presumed as follows:
A silane coupling agent forms a chemical bond with a silica by hydrolyzing a hydrolyzable group generally represented by -OR (wherein R represents a hydrocarbon group having about 1 to 5 carbon atoms), and thus, the silane coupling agent and the silica having different chemical properties can be rigidly bonded to each other. On the other hand, an organic functional group (such as a mercapto group) of the silane coupling agent can chemically bond a polymer and a silica to each other, via the silane coupling agent, through a reaction with the polymer, and thus, the Payne effect that stress is lowered as rubber strain is increased can be reduced, and a rubber reinforcing property can be improved.

A rubber composition of the present invention comprises a guanidine compound having a specific structure as a basic agent for purposes of increasing reaction efficiency of the hydrolysis reaction of the hydrolyzable group of the silane coupling agent. When the guanidine compound represented by general formula (1) is used, steric hindrance is intentionally caused in the guanidine compound, and as a result, the rate of the hydrolysis reaction of the silane coupling agent can be probably controlled. In other words, the guanidine compound represented by general formula (1) seems to work not only as a vulcanization accelerator but also as an aid for the hydrolysis reaction of the silane coupling agent.

Accordingly, it is possible to avoid a situation in which vulcanization starts beyond control before starting to vulcanize a rubber composition, making the rubber composition too hard to handle, and therefore, good scorch resistance (work stability) seems to be attained.

Now, the anti-vibration rubber composition and an anti-vibration rubber of the present invention will be described in detail.

### [Rubber Component]

The anti-vibration rubber composition of the present invention comprises a rubber component containing at least a natural rubber and a high-cis isoprene rubber having a content of cis-1,4 bond of 95% by mass or more.

Examples of the high-cis isoprene rubber include a lithium-catalyzed isoprene rubber and a Ziegler-catalyzed isoprene rubber, and a single one of these or a mixture of these can be used.

From the viewpoint of further lowering the dynamic magnification and further increasing the fatigue property of the anti-vibration rubber composition, a mass ratio (a/b) between the natural rubber (a) and the high-cis isoprene rubber (b) is preferably 50/50 to 99/1. From the same viewpoint, the mass ratio (a/b) is more preferably 50/50 to 95/5, further preferably 50/50 to 90/10, and much further preferably 55/45 to 80/20.

The rubber component may contain another rubber (hereinafter referred to as the additional rubber) in addition to the natural rubber and the high-cis isoprene rubber, and the content of the additional rubber is preferably 20% by mass or less, more preferably 10% by mass or less, and further preferably 5% by mass or less based on the total mass of the rubber component. The rubber component particularly preferably consists of the natural rubber and the high-cis isoprene rubber.

Examples of the additional rubber that can be contained in the rubber component include a styrene-butadiene rubber (SBR), a butadiene rubber (BR), a chloroprene rubber, a butyl rubber (IIR), a halogenated butyl rubber, an ethylene-propylene rubber (EPR, EPDM), a fluorine rubber, a silicone rubber and a urethane rubber, and one of or two or more of these can be used. Among these, a butadiene rubber is preferably used from the viewpoint of a mechanical property of vulcanized rubber and the like.

### [Compound represented by General formula (1)]

The anti-vibration rubber composition of the present invention comprises a compound represented by the above-described general formula (1).

The compound represented by general formula (1) is a guanidine compound and functions as a reaction accelerator for a basic silane compound agent.

In general formula (1), m and n each independently represent an integer of 1 or more. If one of or both of m and n represent 0 (zero), the steric hindrance of the compound represented by general formula (1) is so small that a vulcanization reaction of the rubber composition can proceed quickly. Preferably, m and n each independently represent 1 to 10. If m and n are 10 or smaller, the steric hindrance can be inhibited from being excessively caused. Besides, m and n each independently represent more preferably 1 to 7, and further preferably 1 to 3.

The content of the compound represented by general formula (1) in the anti-vibration rubber composition of the present invention is preferably 0.05 to 5.0 parts by mass, more preferably 0.08 to 3.0 parts by mass, and further preferably 0.1 to 2.5 parts by mass based on 100 parts by mass of the rubber component.

### [Carbon Black and Silica]

The anti-vibration rubber composition of the present invention comprises a carbon black having an iodine adsorption number of 35 mg/g or less and a DBP adsorption number (a dibutyl phthalate adsorption number) of 75 ml/100 g or less, and a silica having a nitrogen adsorption specific surface area (the BET method) of 80 m²/g or more and less than 240 m²/g.

The carbon black and the silica function as reinforcing fillers for the anti-vibration rubber composition, and can increase the elastic modulus and increase the damping property.

The carbon black is not especially limited as long as its iodine adsorption number is 35 mg/g or less and its DBP adsorption number (its dibutyl phthalate adsorption number) is 75 ml/100 g or less, and examples include carbon blacks of SRF, FT and MT. One of these carbon blacks may be singly used, or two or more of these may be used together.

The iodine adsorption number is preferably 20 mg/kg or less, and the DBP adsorption number is preferably 55 ml/100 g or less.

The iodine adsorption number is more preferably 5 to 20 mg/kg, and the DBP adsorption number is more preferably 20 to 55 ml/100 g.

The content of the carbon black is preferably 5 to 100 parts by mass, and more preferably 10 to 80 parts by mass based on 100 parts by mass of the rubber component from the viewpoint of lowering the dynamic magnification of the anti-vibration rubber composition and the anti-vibration rubber of the present invention.

The silica is not especially limited as long as its nitrogen adsorption specific surface area (the BET method) is 80 m²/g or more and less than 240 m²/g, and for example, a silica gel having the BET specific surface area falling in this range is preferably used. If the BET specific surface area is 80 m²/g or more, an excellent fatigue property is attained, and if it is less than 240 m²/g, the silica can be easily dispersed in the rubber composition.

The content of the silica is preferably 3 to 70 parts by mass and more preferably 4 to 50 parts by mass based on 100 parts by mass of the rubber component from the viewpoint of lowering the dynamic magnification of the anti-vibration rubber composition and the anti-vibration rubber of the present invention.

The anti-vibration rubber composition of the present invention can comprise, together with the above-described components, compounding ingredients incorporated for use in a common anti-vibration rubber composition. Examples include usually blended various compounding ingredients such as various fillers excluding a carbon black and a silica (such as clay and calcium carbonate), a silane coupling agent, sulfur working as a vulcanizing agent, a vulcanization accelerator, a vulcanization accelerator aid, a vulcanization retarder, a softener such as various process oils, zinc oxide, stearic acid, a wax, an anti-aging agent, a compatibilizer, a workability improving agent, a lubricant, a tackifier, a petroleum-based resin, a UV absorber, a dispersant, and a homogenizing agent.

### [Silane Coupling Agent]

The anti-vibration rubber composition of the present invention preferably comprises a silane coupling agent.

The type of the silane coupling agent is not especially limited, and one of or two or more of known commercially available products can be used.

The content of the silane coupling agent is preferably 1 to 20% by mass, and more preferably 5 to 15% by mass based on the total mass of the silica. If the content of the silane coupling agent is 1% by mass or more, the silica can be easily dispersed in the rubber composition, so as to improve the reinforcing property of the rubber composition. Even if it is incorporated in a proportion larger than 20% by mass, an effect suitably corresponding to the content cannot be attained in some cases, and hence the content is preferably 20% by mass or less from industrial and economical viewpoints.

The softener is not especially limited and any of known oils can be used, and specifically, process oils such as an aromatic oil, a naphthenic oil and a paraffin oil, vegetable oils such as a coconut oil, synthetic oils such as an alkylbenzene oil, and a castor oil can be used. One of these can be singly used, or two or more of these can be used in combination.

In the present invention, from the viewpoint of accelerating the vulcanization, zinc oxide (ZnO) and various vulcanization accelerator aids can be incorporated. An example of the vulcanization accelerator aid includes a vulcanization accelerator aid such as a fatty acid. The fatty acid may be any of saturated, unsaturated, straight chain and branched chain fatty acids, the number of carbon atoms of the fatty acid is not especially limited, examples include fatty acids having, for example, 1 to 30 carbon atoms, and preferably 15 to 30 carbon atoms, and more specific examples include cyclohexanoic acid (cyclohexane carboxylic acid), naphthenic acid such as alkyl cyclopentane having a side chain, hexanoic acid, octanoic acid, decanoic acid (including branched carboxylic acid such as neodecanoic acid), saturated fatty acids such as dodecanoic acid, tetradecanoic acid, hexadecanoic acid and octadecanoic acid (stearic acid), unsaturated fatty acids such as methacrylic acid, oleic acid, linoleic acid and linolenic acid, and resin acids such as rosin, tall oil acid and abietic acid. One of the vulcanization accelerator aids may be singly used, or two or more of these may be used together. In the present invention, zinc oxide and stearic acid can be suitably used.

The content of the vulcanization accelerator aid is preferably 1 to 15 parts by mass and more preferably 2 to 10 parts by mass based on 100 parts by mass of the rubber component.

The anti-aging agent is not especially limited and any of known agents can be used, and examples include phenol-based anti-aging agents, imidazole-based anti-aging agents and amine-based anti-aging agents. The content of the anti-aging agent is preferably 0.5 to 10 parts by mass and more preferably 1 to 5 parts by mass based on 100 parts by mass of the rubber component.

In obtaining the anti-vibration rubber composition of the present invention, a method for blending the aforementioned components is not especially limited, and all the components as raw materials may be blended at one time and kneaded, or the individual components may be blended in any of two or three steps and then kneaded. Incidentally, in kneading the components, any of known mixers such as a roll, an internal mixer and a Banbury rotor can be used. Besides, if the resultant substance is to be molded into a shape of a sheet or a belt, any of known molding machines such as an extruder and a press may be used.

### <Rubber Composition>

The anti-vibration rubber composition of the present invention can be applied for another purpose excluding the anti-vibration rubber. The structure of the rubber composition of the present invention is similar to that of the anti-vibration rubber composition of the present invention, and its preferable aspect is also similar. Specifically, the rubber composition of the present invention comprises a rubber component containing at least a natural rubber and a high-cis isoprene rubber having a content of cis-1,4 bond of 95% by mass or more; a carbon black having an iodine adsorption number of 20 mg/g or less and a DBP adsorption number of 55 ml/100 g or less; a silica having a nitrogen adsorption specific surface area (the BET method) of 80 m²/g or more and less than 240 m²/g; and a compound represented by the aforementioned general formula (1).

### <Anti-vibration Rubber>

The anti-vibration rubber of the present invention is obtained by curing the anti-vibration rubber composition of the present invention having the above-described structure.

Vulcanizing conditions employed in curing the anti-vibration rubber composition are not especially limited, and conditions of 140 to 180°C and 5 to 120 minutes can be generally employed.

### Examples

### [Examples 1 to 7 and Comparative Examples 1 to 11]

The components for giving compound compositions shown in Tables 1 and 2, respectively, below were kneaded to obtain anti-vibration rubber compositions of Examples 1 to 7 and Comparative Examples 1 to 11, and the thus obtained anti-vibration rubber compositions were cured by vulcanization to obtain anti-vibration rubbers. Each of the thus obtained anti-vibration rubbers was evaluated in the fatigue property (tension fatigue), the dynamic magnification (Kd/Ks) and the scorch property (scorch time), and the results are also shown in Tables 1 and 2.

### 1. Fatigue Property (Tension Fatigue)

The anti-vibration rubber of each of the examples and the comparative examples was repeatedly extended by 0 to 200% at 35°C, so as to count the number of extending times until it was broken. Each result of Comparative Examples 2 to 11 and Examples 1 to 7 shown in Tables 1 and 2 is expressed as an index value obtained on the assumption that the number of extending times obtained in Comparative Example 1 was "100".

A larger index value means a better fatigue property.

### 2. Dynamic Magnification

The anti-vibration rubber of each of the examples and the comparative examples was measured for a static spring constant (Ks) and a dynamic spring constant (Kd) in accordance with JIS K6385 to calculate a dynamic magnification (Kd/Ks). It is noted that the dynamic spring constant Kd was measured at 100 Hz.

Each result of Comparative Examples 2 to 11 and Examples 1 to 7 shown in Tables 1 and 2 is expressed as an index value obtained on the assumption that the dynamic magnification obtained in Comparative Example 1 was "100".

A smaller index value means a lower dynamic magnification, which means that the anti-vibration rubber has a better performance.

### 3. Scorch Time

The scorch time was measured in accordance with JIS K6300-1:2001 (Determination of Viscosity and Scorch Time using Mooney Viscometer).

The scorch time was measured at 130°C, and was measured as a time (in minutes) required, from start of preheating of the anti-vibration rubber of each of the examples and the comparative examples, for an increase of 5 units from a lowest value Vm.

Each result of Comparative Examples 2 to 11 and Examples 1 to 7 shown in Tables 1 and 2 is expressed as an index value obtained on the assumption that the scorch time obtained in Comparative Example 1 was "100".

A larger index value means a longer scorch time, which means the scorch property (work stability) is better.

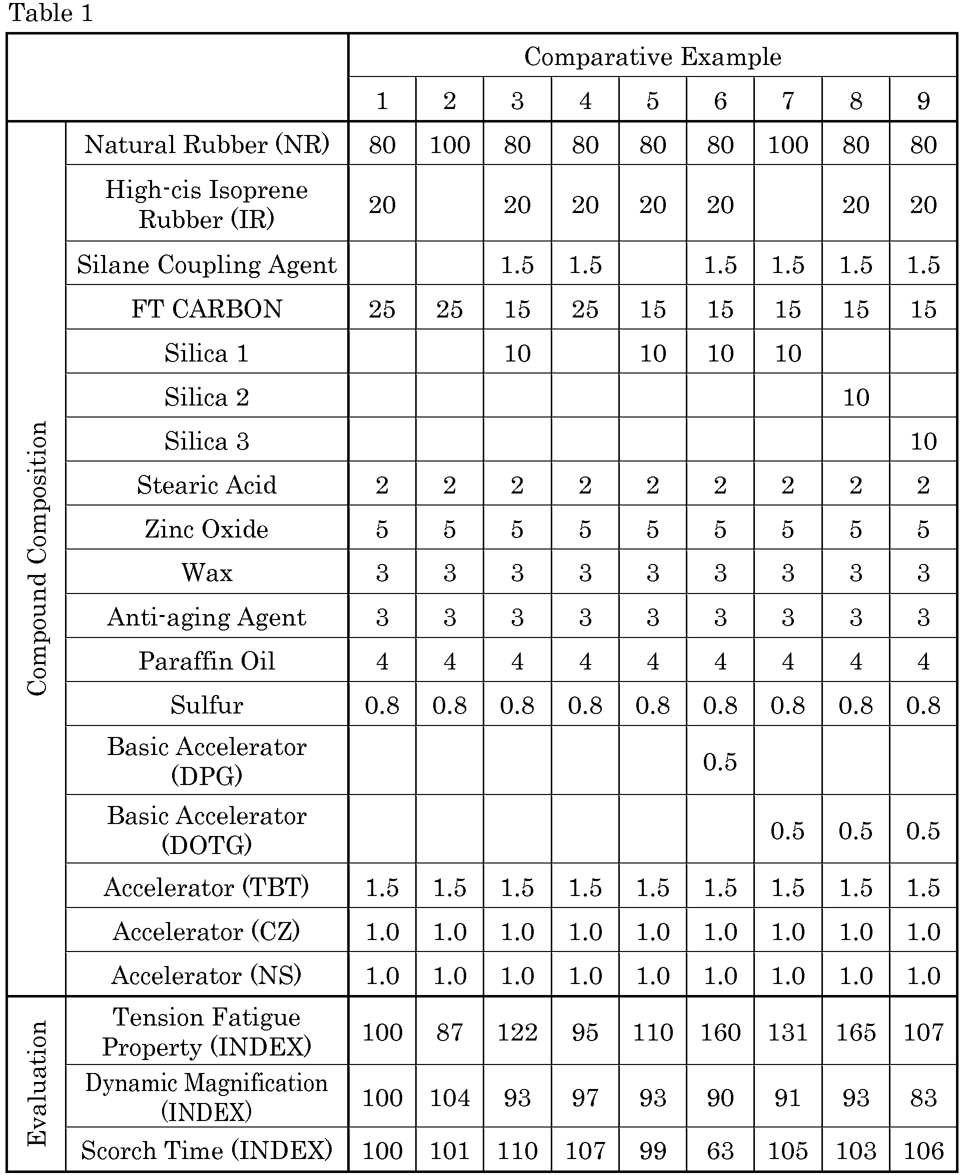

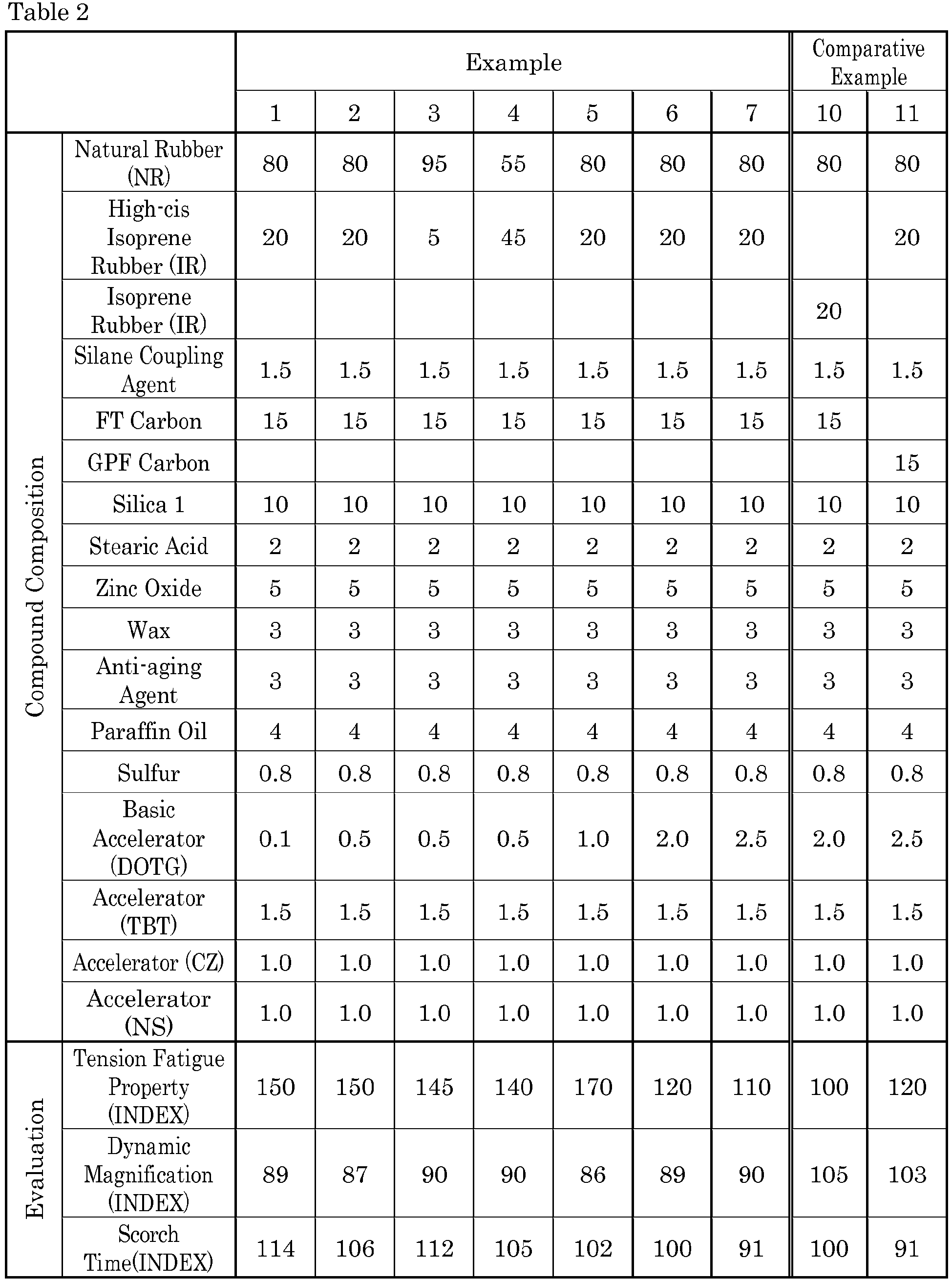

The details of respective components shown in Tables 1 and 2 are as follows:
Natural rubber (NR): "RSS#4"
High-cis isoprene rubber (IR): "IR2200" manufactured by JSR Corporation
[content of cis-1,4 bond: 95% by mass or more]
Isoprene rubber (IR): "Cariflex IR0307" manufactured by Kraton
[content of cis-1,4 bond: 91% by mass]
Silane coupling agent: "Si69" manufactured by Degussa
FT carbon: "Asahi #15" manufactured by Asahi Carbon Co., Ltd.
[iodine adsorption number: 11 g/kg, DBP adsorption number: 41 ml/100 g]
GPF carbon: "STERLING V" manufactured by Cabot Corporation
[iodine adsorption number: 36 g/kg, DBP adsorption number: 92 ml/100 g]
Silica 1: "NIPSIL VN3" manufactured by Tosoh Silica Corporation
[nitrogen adsorption specific surface area (the BET method): 180 to 230 m²/g]
Silica 2: "NIPSIL HD-2" manufactured by Tosoh Silica Corporation
[nitrogen adsorption specific surface area (the BET method): 240 to 320 m²/g]
Silica 3: "NIPSIL E-75" manufactured by Tosoh Silica Corporation
[nitrogen adsorption specific surface area (the BET method): 30 to 60 m²/g]
Stearic acid: "Stearic acid 50S" manufactured by New Japan Chemical Co., Ltd.
Zinc oxide: "No. 3 zinc oxide" manufactured by HakusuiTech Co., Ltd.
Wax: "SUNTIGHT S" manufactured by Seiko Chemical Co., Ltd.
Anti-aging agent: N-phenyl-N'-(1,3-dimethylbutyl)-p-phenylenediamine, "Nocrac 6C" manufactured by Ouchi Shinko Chemical Industrial Co., Ltd.
Paraffin oil: "Sunpar2280" manufactured by Sun Refining and Marketing Company
Sulfur: "Sulfur Powder" manufactured by Tsurumi Kagaku Kogyo Kabushikikaisha
Basic accelerator (DPG): "NOCCELER D" manufactured by Ouchi Shinko Chemical Industrial Co., Ltd.
[guanidine compound represented by general formula (1) in which m = n = 0 in the hydrocarbon group represented by -CₘH₂ₘ₊₁ or -CₙH₂ₙ₊₁]
Basic accelerator (DOTG): "NOCCELER DT" manufactured by Ouchi Shinko Chemical Industrial Co., Ltd.
[guanidine compound represented by general formula (1) in which m = n = 1 in the hydrocarbon group represented by -CₘH₂ₘ₊₁ or -CₙH₂ₙ₊₁, and the hydrocarbon group is bonded in the ortho position]
Accelerator (TBT): "ACCEL TBT" manufactured by Kawaguchi Chemical Industry Co., Ltd.
Accelerator (CZ): "ACCEL CZ" manufactured by Kawaguchi Chemical Industry Co., Ltd.
Accelerator (NS): "NOCCELER NS-F" manufactured by Ouchi Shinko Chemical Industrial Co., Ltd.

As is obvious from comparison between Comparative Examples 1 to 9 and Example 2, comparison between Comparative Example 10 and Example 6 and comparison between Comparative Example 11 and Example 7, the anti-vibration rubber compositions of the examples had a low dynamic magnification, an excellent fatigue property, a long scorch time, and excellent work stability.

### Industrial Applicability

The composition of the present invention is suitably used for various anti-vibration rubber members, such as an engine mount, a strut mount, a member mount, a suspension bush, a toe correct bush, a lower arm bush, a differential mount, a muffler hanger, a spring sheet, a dynamic damper, a viscous rubber damper, and a center support rubber of various automobiles.

## Claims

1. An anti-vibration rubber composition, comprising:
a rubber component containing at least a natural rubber and a high-cis isoprene rubber having a content of cis-1,4 bond of 95% by mass or more;
a carbon black having an iodine adsorption number of 20 mg/g or less and a DBP adsorption number of 55 ml/100 g or less;
a silica having a nitrogen adsorption specific surface area (the BET method) of 80 m²/g or more and less than 240 m²/g; and
a compound represented by the following general formula (1): 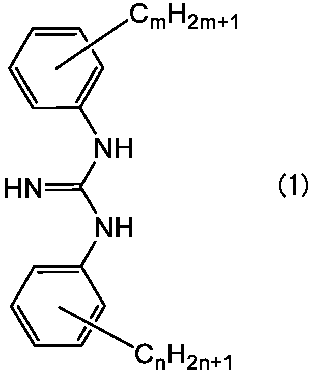
wherein m and n each independently represent an integer of 1 or more.

2. The anti-vibration rubber composition according to claim 1, wherein the carbon black has an iodine adsorption number less than 20 mg/g and a DBP adsorption number less than 55 ml/100 g.

3. The anti-vibration rubber composition according to claim 1 or 2, wherein a mass ratio (a/b) between the natural rubber (a) and the high-cis isoprene rubber (b) is 50/50 to 99/1.

4. The anti-vibration rubber composition according to any one of claims 1 to 3, further comprising a silane coupling agent.

5. An anti-vibration rubber obtained by curing the anti-vibration rubber composition according to any one of claims 1 to 4.

## Patentansprüche

1. Schwingungsreduzierende Kautschukzusammensetzung, umfassend:
eine Kautschukkomponente, die mindestens einen Naturkautschuk und einen Hoch-cis-Isoprenkautschuk enthält, der einen Gehalt an cis-1,4-Bindung von 95 Masse-% oder mehr aufweist;
einen Ruß, der eine Iodadsorptionszahl von 20 mg/g oder weniger und eine DBP-Adsorptionszahl von 55 ml/100 g oder weniger aufweist;
ein Siliciumdioxid, das einen stickstoffadsorptionsspezifischen Oberflächenbereich (das BET-Verfahren) von 80 m²/g oder mehr und weniger als 240 m²/g aufweist; und
eine Verbindung, die durch die folgende allgemeine Formel (1) dargestellt ist: 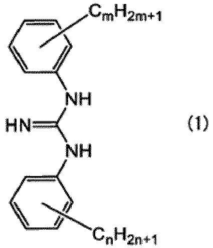
wobei m und n jeweils unabhängig eine ganze Zahl von 1 oder mehr darstellen.

2. Schwingungsreduzierende Kautschukzusammensetzung nach Anspruch 1, wobei der Ruß eine Iodadsorptionszahl von weniger als 20 mg/g und eine DBP-Adsorptionszahl von weniger als 55 ml/100 g aufweist.

3. Schwingungsreduzierende Kautschukzusammensetzung nach Anspruch 1 oder 2, wobei ein Masseverhältnis (a/b) zwischen dem Naturkautschuk (a) und dem Hoch-cis-Isoprenkautschuk (b) 50/50 bis 99/1 beträgt.

4. Schwingungsreduzierende Kautschukzusammensetzung nach einem der Ansprüche 1 bis 3, ferner einen Silanhaftvermittler umfassend.

5. Schwingungsreduzierender Kautschuk, der durch Aushärten der schwingungsreduzierenden Kautschukzusammensetzung nach einem der Ansprüche 1 bis 4 erhalten wird.

## Revendications

1. Composition de caoutchouc anti-vibration, comprenant:
un composant de caoutchouc contenant au moins un caoutchouc naturel et un caoutchouc d'isoprène à teneur élevée en cis ayant une teneur en liaisons cis-1,4 de 95 % en masse ou plus;
un noir de carbone ayant un indice d'adsorption d'iode de 20 mg/g ou moins et un indice d'adsorption de DBP de 55 ml/100 g ou moins;
une silice ayant une surface spécifique d'adsorption d'azote (le procédé B.E.T.) de 80 m²/g ou plus et inférieure à 240 m²/g; et
un composé représenté par la formule générale suivante (1): 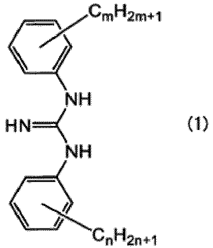
où m et n représentent chacun indépendamment un nombre entier d'une valeur de 1 ou plus.

2. Composition de caoutchouc anti-vibration selon la revendication 1, dans laquelle le noir de carbone présente un indice d'adsorption d'iode inférieur à 20 mg/g et un indice d'adsorption de DBP inférieur à 55 ml/100 g.

3. Composition de caoutchouc anti-vibration selon la revendication 1 ou 2, dans laquelle un rapport en masse (a/b) entre le caoutchouc naturel (a) et le caoutchouc d'isoprène à teneur élevée en cis (b) est de 50/50 à 99/1.

4. Composition de caoutchouc anti-vibration selon l'une quelconque des revendications 1 à 3, comprenant en outre un agent de couplage au silane.

5. Caoutchouc anti-vibration obtenu par durcissement de la composition de caoutchouc anti-vibration selon l'une quelconque des revendications 1 à 4.
